# EUROPÄISCHE PATENTSCHRIFT

(11) **EP 2 127 846 B1**
(45) Veröffentlichungstag und Bekanntmachung des Hinweises auf die Patenterteilung: **20.05.2015**
(21) Anmeldenummer: 08009907.0
(22) Anmeldetag: 30.05.2008
(51) Int. Cl.: B29C 45/18

(54) **Vorrichtung zur Verarbeitung von Kunststoffen**
Device for processing plastics
Dispositif destiné au traitement de matières plastiques

(43) Veröffentlichungstag der Anmeldung: 02.12.2009
(73) Patentinhaber: Hunold + Knoop Kunststofftechnik GmbH, 59590 Geseke (DE)
(72) Erfinder: Knoop, Karl, 33154 Salzkotten (DE)
(74) Vertreter: Ostermann, Thomas

(56) Entgegenhaltungen:
- EP-A- 0 623 445
- DE-A1- 2 144 069
- DE-A1- 10 136 243
- JP-A- 1 176 540
- US-A1- 2004 262 813
- MENGES G ET AL: "VERNETZBARKEIT THERMOPLASTISCHER SCHMELZEN BEIM SPRITZGIESSEN" PLASTVERARBEITER, HUETHIG GMBH, HEIDELBERG, DE, Bd. 21, Nr. 5, 1. Mai 1970 (1970-05-01), Seiten 1-11, XP002042604 ISSN: 0032-1338

## Beschreibung

Die Erfindung betrifft eine Vorrichtung zur Verarbeitung von Kunststoffen nach dem Oberbegriff des Patentanspruchs 1.

Aus der DE 10 2006 038 197 A1 ist bereits eine Vorrichtung zur Verarbeitung von Duroplasten bekannt, die eine Verarbeitungseinheit mit einem Zylinder und in einer in diesem Zylinder angeordneten Schnecke umfasst. Der Zylinder umfasst eine Einfüllöffnung zur Zufuhrung einer ersten Komponente und einer zweiten Komponente, die in dem Zylinder mittels der Schnecke vermischt werden. Damit die Verarbeitungseinheit kontinuierlich betrieben werden kann, ist einer von einer Auslassöffnung der Verarbeitungseinheit wegführenden Einspritzleitung eine Speichereinheit zugeordnet, in der eine Zwischenspeicherung des in der Verarbeitungseinheit gemischten Materials erfolgt. Ferner ist der Einspritzleitung eine Einspritzeinrichtung mit einem Einspritzkolben zugeordnet, damit das gemischte Material mit einem relativ hohen Druck in das Formwerkzeug eingespritzt werden kann. Weitere Materialien, wie Füllstoffe oder Additive, können über weitere stromabwärts der Einfüllöffnung angeordnete weitere Einfüllöffnungen zugeführt werden. Nachteilig an der bekannten Vorrichtung ist, dass der Bauteileaufwand für einen kontinuierlichen Betrieb der Verarbeitungseinheit relativ aufwendig ist. Hierzu ist zumindest die Speichereinheit erforderlich. Ein weiterer Nachteil besteht darin, dass die Zuführung der Komponenten von entsprechenden Vorratsbehältern zu der Verarbeitungseinheit bei wechselnden Verarbeitungseinheiten stets neu dosiert werden muss.

Aus der DE 2 144 069 A ist eine Vorrichtung zur Verarbeitung von Kunststoffen enthaltend eine Spritzgießeinheit und eine Dosiereinheit bekannt. Die Dosiereinheit umfasst einen doppelt wirkenden Dosierzylinder, der über einem Verdrängungskolben eine von einem Vorratsbehälter zugeführte zweite Komponente in den Formraum der Spritzgießeinheit drückt.

Aus der EP 0 623 445 A1 ist eine Vorrichtung zur Verarbeitung von Kunststoffen mit einer Spritzgießeinheit und einer Dosiereinheit bekannt, bei der die Dosiereinheit über eine mechanische Koppeleinheit mit einer Schnecke der Spritzgießeinheit gekoppelt ist. Die Dosiereinheit umfasst einen einfach wirkenden Kolben, mittels derer von einem Vorratsbehälter diskontinuierlich eine zweite Komponente in eine Einspritzdüse zugeführt wird.

Aus der JP 01 176540 A, US 2004/262813 A1, DE 101 36 243 A1 und der XP 002042604 A sind Vorrichtungen zur Verarbeitung von Kunststoffen enthaltend eine Spritzgießeinheit, eine Dosiereinheit und einen Vorratsbehälter bekannt, die keinen doppelt wirkenden Dosierzylinder zur kontinuierlichen Zuführung einer zweiten Komponente aufweisen.

Aufgabe der vorliegenden Erfindung ist es daher, eine Vorrichtung zur Verarbeitung von Kunststoffen derart weiterzubilden, dass mit geringem Verarbeitungs- bzw. Dosieraufwand eine kontinuierliche Zuführung von einer zweiten Komponente in eine Spritzgießeinheit eingebracht wird.

Zur Lösung dieser Aufgabe weist die Erfindung die Merkmale des Patentanspruchs 1 auf.

Ein Vorteil der erfindungsgemäßen Vorrichtung besteht darin, dass eine Spritsgießeinheit zum vermengen von mindestens zwei Komponenten einerseits und zum Einspritzen unter Druck der vermischten Komponenten in ein Formwerkzeug andererseits nutzbar ist. Der Bauteileaufwand ist hierdurch relativ gering. Ein weiterer Vorteil der erfindungsgemäßen Vorrichtung ergibt sich daraus, dass eine Dosiereinheit für die Zuführung der zweiten Komponente über eine mechanische Koppeleinheit mit einer Schnecke der Verarbeitungseinheit gekoppelt ist. Auf diese Weise kann die Dosierung der zweiten Komponente in Abhängigkeit von der axialen Lage der Schnecke erfolgen. Vorteilhaft kann hierdurch eine definierte Zuführung der zweiten Komponente in Abhängigkeit von dem für die Spritzgießeinheit vorgesehen Volumen der ersten Komponente bzw. einem Hub der Schnecke bzw. einer axialen Geschwindigkeit der Schnecke erfolgen. Es erfolgt somit eine kontinuierliche Zuführung der zweiten Komponente in Abhängigkeit von der Drehzahl bzw. Geschwindigkeit der Schnecke. Bezogen auf den Schneckenweg lässt sich somit eine konstante Menge der zweiten Komponente in einen Zylinder der Verarbeitungseinheit einführen, was eine innige und vollständige Durchmischung der Komponenten in dem Zylinder begünstigt. Vorteilhaft kann die Spritzgießeinheit der erfindungsgemäßen Vorrichtung als eine herkömmliche Spritzgießeinheit verwendet werden, wenn die zweite Einfüllöffnung mittels eines Stopfens dichtend verschlossen wird. Nach der Erfindung ist eine Kolbenstange der Dosiereinheit über die mechanische Koppeleinheit starr mit der Schnecke der Spritzgießeinheit verbunden. Vorteilhaft wird hierdurch eine wartungsarme mechanische Kopplung zwischen der Schnecke einerseits und der Dosiereinheit andererseits gewährleistet. Nach der Erfindung weist die Dosiereinheit einen doppelt wirkenden Dosierzylinder mit beidseitiger Kolbenstange (Gleichgangzylinder) einerseits und eine Ventileinheit andererseits auf, wobei der doppelt wirkende Zylinder zwei Anschlüsse für die Zuführung der zweiten Komponente aus einem Vorratsbehälter und zwei Anschlüsse für die Zuführung der zweiten Komponente zu der zweiten Einfüllöffnung der Spritzgießeinheit aufweist. Vorteilhaft kann bei einem Vorhub und einem Rückhub der Schnecke die gleiche Volumenmenge in die zweite Einfüllöffnung gedrückt werden. Während die zweite Komponente, die vorzugsweise als Flüssigkeit ausgebildet ist, aus einer Druckhammer des doppelt wirkenden Zylinders in die zweite Einfüllöffnung eingedrückt wird, wird eine Saugkammer des Zylinders mit einem weiteren Volumen der zweiten Komponente aus dem vorratsbehälter gefüllt. Es erfolgt somit eine kontinuierliche Zuführung und Durchmischung der ersten Komponente und der zweiten Komponente in der Spritzgießeinheit. Nach der Erfindung weist die Ventilenheit vier Wegeventil, vorzugsweise vier 2/2-Wegeventile auf, die jeweils den Anschlüssen des Gleichgangszylinders zugeordnet sind. Die vorzugsweise 2/2-Wegeventile werden von einer Steuereinheit derart angesteuert, dass die der Vorratskammer zugeordneten Anschlüsse einerseits und der zweiten Einfüllöffnung zugeordneten Anschlüsse des Gleichgangzylinders andererseits wechselweise geöffnet bzw. geschlossen werden. Auf diese Weise wirken die zu beiden Seiten des Kolbens des Gleichgangzylinders angeordneten Klammern alternierend als Saug- und Druckkammner.

Nach einer bevorzugten Ausführungsform der Erfindung ist die Schnecke über die mechanische Koppeleinheit derart mit der Dosiereinheit verbunden bzw. gekoppelt, dass in Abhängigkeit von einem Vorhub und/oder einem Rückhub der Schnecke ein vorgegebener prozentualer Volumen- oder Mengenanteil der zweiten Komponenten bezogen auf die erste Komponente einer zweiten Einfüllöffnung des Zylinders zugeführt wird. Je länger der Hub der Schnecke ist, desto größer ist das Volumen der zweiten Komponente, das durch die zweite Einfüllöffnung zugeführt wird. Bei gleichem Vorhub und Rückhub der Schnecke wird bei jedem Zyklus der Schnecke der gleiche Volumenanteil der zweiten Komponente in die zweite Einfüllöffnung geleitet. Ist der Vorhub bzw. Rückhub der Schnecke aufgrund einer anderen Konfiguration der Verarbeitungseinheit beispielsweise größer, so dass das Volumen der über die erste Einfüllöffnung zugeführten ersten Komponente größer ist, wird mittels der erfindungsgemäßen hubabhängigen Dosiereinheit ohne Änderung der Einstellung ein entsprechender prozentualer Volumenanteil der zweiten Komponente über die zweite Einfüllöffnung in den Zylinder der Verarbeitungseinheit geführt. Der Umrüstaufwand ist somit vergleichsweise gering.

Ausführungsbeispiele der Erfindung werden nachfolgen anhand der Zeichnungen näher erläutert.

Es zeigen:
- Figur 1: ein Blockschaltbild einer Vorrichtung nach einer ersten Ausführungsform und
- Figur 2: ein Blockschaltbild nach einer zweiten Ausführungsform der Erfindung.

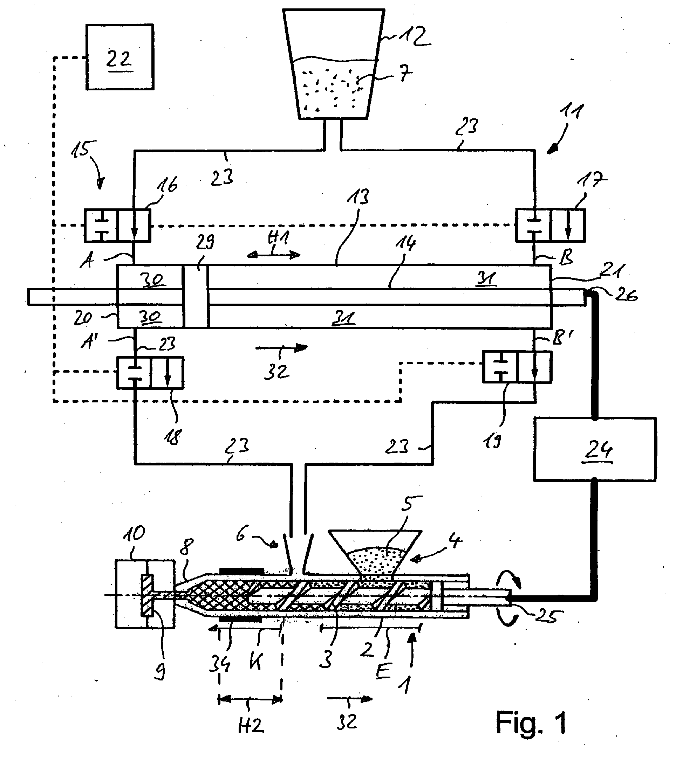

Eine erfindungsgemäße Vorrichtung zur Verarbeitung von Kunststoffen, insbesondere Duroplasten wie beispielsweise duroplastischem Polyurethan, weist nach einer ersten Ausführungsform der Erfindung gemäß Figur 1 als Verarbeitungseinheit eine Spritzgießeinheit 1 auf, die einen Zylinder 2 umfasst, in dem eine Schnecke 3 drehbar aufgenommen ist. Der Zylinder 2 weist eine erste Einfüllöffnung 4 zur Zuführung einer ersten Komponente 5 des Kunststoffmaterials und eine zweite Einfüllöffnung 6 zur Zuführung einer zweiten Komponente 7 des Kunststoffmaterials auf. Die zweite Einfüllöffnung 6 ist in einem Bereich zwischen einer Einzugszone E und einer Kompressionszone K der Spritzgießeinheit 1 angeordnet.

In einem vorderen Endbereich der Spritzgießeinheit 1 ist eine,als Auslassöffnung ausgebildete Spritzdüse 8 angeordnet, durch die die als Gemisch vorliegenden Komponenten 5 und 7 während eines Spritzvorgangs der Spritzgießeinheit 1 mit hohem Druck in eine Kavität 9 eines Formwerkzeugs 10 eingespritzt werden und dort unter Druckeinwirkung in den festen Zustand übergehen. Der in der Kompressionszone K verkürzt dargestellte Zylinder 2 weist in diesem Bereich eine beispielhaft dargestellte Heizung 34 auf, so dass die als Granulat oder Pulver über die erste Einfüllöffnung 4 eingegebene erste Komponente 5 plastifiziert wird.

Zur Herstellung bzw. Verarbeitung von Duroplasten kann die zweite Komponente 7 beispielsweise als ein flüssiges Prepolymer ausgebildet sein, das mittels einer Dosiereinheit 11 dosiert über die zweite Einfüllöffnung 6 in den Zylinder 2 eingeleitet wird zum Vermengen bzw. Durchmischen mit der bereits vorhandenen ersten Komponente 5. Wie aus der Figur 1 zu ersehen ist, ist die Dosiereinheit 11 zwischen der zweiten Einfüllöffnung 6 und einem die zweite Komponente 7 enthaltenen Vorratsbehälter 12 angeordnet. Die Dosiereinheit 11 weist einen doppelt wirkenden Dosierzylinder 13 mit einer beidseitigen Kolbenstange 14 auf, der als ein Gleichgangdosierzylinder wirkt. Der Dosierzylinder 13 weist zum einen zwei dem Vorratsbehälter 12 zugeordnete Anschlüsse A, B einerseits und zwei der zweiten Einfüllöffnung 6 zugeordnete Anschlüsse A' , B' auf. Die Anschlüsse A und A' sind an einem ersten Ende 20 des Dosierzylinders 13 und die Anschlüsse B, B' an einem zweiten gegenüberliegenden Ende 21 des Dosierzylinders 13 angeordnet.

Ferner weist die Dosiereinheit 11 eine Ventileinheit 15 mit vier Wegeventilen 16, 17, 18, 19 auf, die vorzugsweise als 2/2-Wegeventile ausgebildet sind. Die Wegeventile 16, 17, 18, 19 sind jeweils einem Anschluss A, B, A', B' des Dosierzylinders 13 zugeordnet. Die Wegeventile 16, 17, 18, 19 werden durch eine gemeinsame Steuereinheit 22 angesteuert. Die Wegeventile 16, 17, 18, 19 sind durch entsprechende Leitungen 23 jeweils mit einem der Anschlüsse A, B, A', B' des Dosierzylinders 13 einerseits und mit dem Vorratsbehälter 12 oder der zweiten Einfüllöffnung 6 andererseits verbunden.

Die Dosiereinheit 11 ist über eine mechanische Koppeleinheit 24 fest mit der Schnecke 3 der Spritzgießeinheit 1 verbunden. Die mechanische Koppeleinheit 24 kann beispielsweise eine oder mehrere Stangen umfassen, wobei ein erstes Ende der mechanischen Koppeleinheit 24 starr oder fest mit einem rückseitigen Ende 25 der Schnecke 3 und ein anderes Ende der mechanischen Koppeleinheit 24 mit einem Ende 26 der Koppelstange 14 starr verbunden ist. Gegebenenfalls kann die mechanische Koppeleinheit 24 auch ein Getriebe umfassen, so dass der Weg der Kolbenstange 14 nicht gleich sein muss mit dem Weg der Schnecke 3.

Zum Dosieren der zweiten Komponente 7 wird die Kolbenstange 14 in Abhängigkeit von der Bewegung der Schnecke 3 zwischen einer ersten Endstellung und einer zweiten Endstellung hin und her bewegt. Ein an der Kolbenstange 14 befestigter Kolben 29 wird entlang eines Hubes H1 periodisch hin und herbewegt, wobei der Hub H1 gleichgroß ist wie ein Vorhub bzw. Rückhub H2 der Schnecke 3. Gegebenenfalls kann durch das in der mechanischen Koppeleinheit 24 integrierte Getriebe der Hub H1 auch länger oder kürzer sein als der Hub H2 der Schnecke 3. Hierdurch kann auch das prozentuale Volumenverhältnis der zweiten Komponenten 7 zu der ersten Komponente 5 verändert werden. Bewegt sich die Schnecke 3 um eine Wegdifferenz, bewegt sich der Kolben 29 parallel versetzt zu der Schnecke 3 in der gleichen Richtung. Infolge der Ansteuerung der Ventile 16, 17, 18, 19 befinden sich in den zu beiden Seiten des Kolbens 29 anschließenden Kammern 30, 31 ein Volumenanteil der zweiten Komponente 7. Je nach Bewegungsrichtung des Kolbens 29 ist die eine Kammer 30 als Saugkammer und die andere Kammer 31 als Druckkammer und umgekehrt ausgebildet. Gemäß des in Figur 1 dargestellten Zustandes, bei dem die Schnecke 3 und der Kolben 29 in Pfeilrichtung 32 bewegt werden, bildet die in Bewegungsrichtung 32 vor dem Kolben 29 angeordnete Kammer 31 die Druckkammer und die in Bewegungsrichtung 32 des Kolbens 29 hinter demselben angeordnete Kammer 30 eine Saugkammer. Die Wegeventile 16, 17, 18, 19 sind derart angesteuert, dass durch die Bewegung des Kolbens 29 in Pfeilrichtung 32 die zweite Komponente 7 aus dem Vorratsbehälter 12 durch die Leitung 23 in die Saugkammer 30 angesaugt und der in der Druckkammer 31 befindliche Anteil der zweiten Komponente 7 durch die Leitung 23 in die zweite Einfüllöffnung eingedrückt wird. Hierzu befinden sich die Wegeventile 16 und 19 in einer Durchgangs- und die Wegeventile 17, 18 in einer Schließstellung.

Bei entgegengesetzter Bewegungsrichtung des Kolbens 29 entgegen der Pfeilrichtung 32 sind die Wegeventile 16, 19 in Schließstellung und die Wegeventile 17, 18 in Durchgangsstellung. Die Kammer 30 bildet dann eine Druckkammer, während die Kammer 31 eine Saugkammer bildet.

Infolge der Kopplung der Kolbenstange 14 bzw. des Kolbens 29 an die Schnecke 3 werden somit die Kammern 30, 31 alternierend mit einem Volumenanteil der zweiten Komponente 7 befüllt bzw. entleert, so dass eine gezielte und von dem Weg bzw. Geschwindigkeit der Schnecke 3 abhängige Dosierung bzw. Zuführung der zweiten Komponente 7 zu der zweiten Einfüllöffnung 6 gewährleistet ist. Hierdurch ist eine feste prozentuale Dosierung der zweiten Komponente 7 bezogen auf die erste Komponente 5 gewährleistet, wobei während des Vorhubs der Schnecke 3 und des Rückhubs der Schnecke 3 jeweils der gleiche Volumenanteil der zweiten Komponente 7 durch die zweite Einfüllöffnung 6 in den Zylinder 2 eingeleitet wird.

Durch die Hin- und Herbewegung des Kolbens 29 in Abhängigkeit von dem Hub der Schnecke 3 wird eine kontinuierliche Zuführung der zweiten Komponente 7 zum einen während des Dosierzyklus' und zum anderen während des Spritzzyklus' der Spritzgießeinheit 1 gewährleistet. Das heißt, dass der Durchsatz der zugeführten Menge der zweiten Komponente 7 pro Vorhub und Rückhub konstant ist.

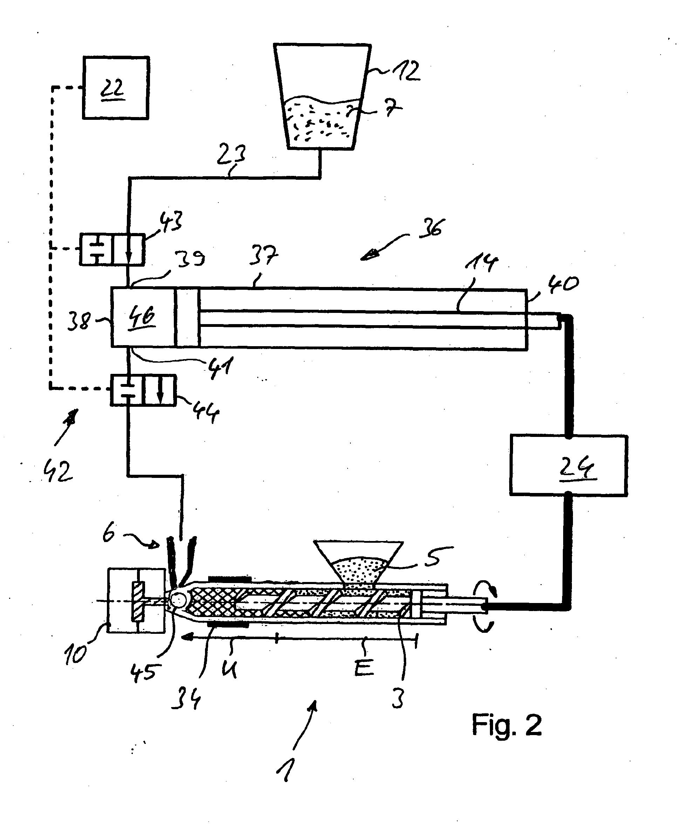

Nach einer nicht erfindungsgemäßen Ausführungsform der Vorrichtung gemäß Figur 2 ist im Unterschied zu dem vorhergehenden Ausführungsbeispiel eine Dosiereinheit 36 vorgesehen, die über einen einfach wirkenden Dosierzylinder (Differentialzylinder) 37 verfügt, der an einem ersten Ende 38 einen ersten Anschluss 39 und einen zweiten Anschluss 41 aufweist. An einem dem ersten Ende 38 gegenüberliegenden zweiten Ende 40 des Dosierzylinders 37 ist eine Kolbenstange 14 des Dosierzylinders 37 über die mechanische Koppeleinheit 24 mit der Schnecke 3 der Spritzgießeinheit verbunden.

Gleiche Bauteile bzw. Bauteilfunktionen sind mit den gleichen Bezugszeichen versehen.

Die Dosiereinheit 36 weist eine Ventileinheit 42 auf, die im Wesentlichen aus einem ersten Ventil 43 (Zweiwegeventil) und einem zweiten Ventil 44 besteht. Das erste Ventil 43 ist dem ersten Anschluss 39 und das zweite Ventil 44 dem zweiten Anschluss 41 zugeordnet. Mittels der Steuereinheit 22 werden die Ventile 43 und 44 derart angesteuert, dass sich bei einem Spritzzyklus der Spritzgießeinheit 1 das den ersten Anschluss 39 mit dem Vorratsbehälter 12 verbindende erste Ventil 43 in einer Schließstellung und dass das den zweiten Anschluss 41 mit der zweiten Einfüllöffnung 6 der Spritzgießeinheit 1 verbindende zweite Ventil 44 in einer Durchgangsstellung befindet. Die zweite Einfüllöffnung 6 der Spritzgießeinheit 1 befindet sich in einem düsennahen Bereich derselben, in dem ein statischer Mischer 45 angeordnet ist. Somit wird während des Einspritzzyklus' die zweite Komponente aus einer als Druckkammer wirkenden Kammer 46 des Dosierzylinders 37 in die Spritzgießeinheit 1 eingedrückt bzw. eingeimpft. Bei einer entgegengesetzten Bewegung der Schnecke 3, also bei einem Rückhub der Schnecke 3 wie in Figur 2 dargestellt, derselben, in der sich die Spritzgießeinheit 1 in einem Dosierzyklus befinde, wird der Kolben 29 gleichförmig mit der Schnecke 3 zurückbewegt, so dass sich das Raumvolumen der Kammer 46 erhöht und bei vorgegebener Stellung der Ventile 43, 44, wobei das erste Ventil 43 in Durchgangsstellung und das zweite Ventil 44 in Schließstellung ist, die zweite Komponente 7 aus dem Vorratsbehälter 12 in die Kammer 46 gesaugt wird. Die Kammer 46 bildet hierbei eine Saugkammer.

Gemäß dieser Ausführungsform wird die Spritzgießeinheit 1 diskontinuierlich mit der zweiten Komponente befüllt, das heißt stets während des Spritzzyklus'.

Die zweite Komponente 7 kann beispielsweise als ein Prepolymer ausgebildet sein, das 10 Gew% von der ersten Komponente 5, beispielsweise ein Elastollan-Material ist.

Nach einer nicht dargestellten weiteren Ausführungsform kann der Spritzgießeinheit auch mindestens eine weitere dritte Einfüllöffnung aufweisen. Zwischen der dritten Einfüllöffnung und einem weiteren Vorratsbehälter könnte dann eine weitere baugleiche Dosiereinheit 11, 36.

## Patentansprüche

1. Vorrichtung zur Verarbeitung von Kunststoffen, insbesondere duroplastischen Polyurethan, wobei mindestens zwei eine Vernetzung oder Reaktion verursachende Komponenten miteinander vermischt werden, mit einer Verarbeitungseinheit enthaltend einen Zylinder (2), in dem eine Schnecke (3) drehbar aufgenommen ist, wobei der Zylinder (2) zumindest eine Einfüllöffnung (4, 6) und eine Auslassöffnung (8) aufweist, und mit einem Formwerkzeug (10) enthaltend eine Kavität (9) zur Aufnahme und Aushärtung der vermischten Komponenten, dass die Verarbeitungseinheit alls eine Spritzgießeinheit (1) ausgebildet ist mit einer Spritzdüse (8), durch die die plastifizierte Spritzgießmasse bestehend aus der ersten Komponente (5) und der zweiten Komponente (7) in die Kavität (9) des Formwerkzeugs (10) eingespritzt wird, dass der Zylinder (2) der Spritzgießeinheit (1) mindestens eine zweite Einfüllöffnung (6) aufweist zur Zuführung der zweiten Komponente (7), dass die Schnecke (3) des Zylinders (2) über eine mechanische Koppeleinheit (24) mit einer Dosiereinheit (11, 36) verbunden ist, derart, dass in Abhängigkeit von einer axialen Lage der Schnecke (3) die durch die zweite Einfüllöffnung (6) eingebrachte Menge der zweiten Komponente (7) dosiert wird, dass die Dosiereinheit (11) einen doppelt wirkenden Dosierzylinder (13) mit einer beidseitigen Koppelstange einerseits und eine Ventileinheit (15) andererseits aufweist, über die der doppelt wirkende Dosierzylinder (13) mit einem Vorratsbehälter (12) der zweiten Komponente (7) und mit der zweiten Einfüllöffnung (6) des Spritzgießeinheit (1) verbunden ist, **dadurch gekennzeichnet, dass** die Dosiereinheit (11, 36) über eine Kolbenstange (14) und einen Kolben (29) verfügt, wobei die Kolbenstange (14) über die mechanische Koppeleinheit (24) starr und/oder fest mit der Schnecke (3) der Spritzgießenheit (1) verbunden ist, dass die ventileinheit (15) vier Wegeventile umfasst, so dass zwei dem vorratsbehälter (12) zugeordnete Anschlüsse (A, B) des Dosierzylinders (13) und zwei der zweiten Einfüllöffnung (6) zugeordnete Anschlüsse (A', B') des Dosierzylinders (13) jeweils über ein Wegeventil (16, 17, 18, 19) mit dem Vorratsbehälter (12) bzw. der zweiten Einfüllöffnung (6) gekoppelt sind, dass die dem Vorratsbehälter (12) und der zweiten Einfüllöffnung (6) zugeordneten Anschlüsse (A, B; A', B') des Dosierzylinders (11) jeweils an gegenüberliegenden Enden desselben angeordnet sind und dass die Wegeventile (16, 17, 18, 19) der Dosiereinheit (11) derart angesteuert sind, dass die durch die mittels der mechanischen Koppeleinheit (24) bewirken axialen Bewegung der Kolbenstange (14) in Richtung eines ersten Endes (20) des Dosierzylinders (13) und in Richtung eines zweiten Endes (21) des Dosierzylinders (13) die in einer in Bewegungsrichtung vor dem Kolben (29) angeordneten Kammer (31) befindliche zweite Komponente (7) zur zweiten Einfüllöffnung (6) hinausgedrückt und ein Anteil der in dem Vorratsbehälter (12) befindlichen zweiten Komponente (7) in die in Bewegungsrichtung hinter dem Kolben (29) angeordnete Kammer (30) angesaugt wird.

2. Vorrichtung nach Anspruch 1, **dadurch gekennzeichnet, dass** die mechanische Koppeleinheit (24) auf die Dosiereinheit (11, 36) derart einwirkt, dass in Abhängigkeit von einem Vorhub und/oder einem Rückhub der Schnecke (3) ein vorgegebener prozentualer Volumenanteil der zweiten Komponente (7) bezogen auf die erste Komponente (5) der zweiten Einfüllöffnung (6) zugeführt wird.

3. Vorrichtung nach Anspruch 1 oder 2, **dadurch gekennzeichnet, dass** die mechanische Koppeleinheit (24) ein Verbindungsgestänge aufweist, das an einem ersten Ende fest mit der Schnecke (3) und an einem zweiten Ende fest mit der Kolbenstange (14) der Dosiereinheit (11, 36) verbunden ist.

4. Vorrichtung nach einem der Ansprüche 1 bis 3, **dadurch gekennzeichnet, dass** die zweite Einfüllöffnung (6) in einem Bereich zwischen einer Einzugszone (E) und einer Kompressionszone (K) der Spritzgießeinheit (1) angeordnet ist.

## Claims

1. A device for processing plastics, in particular thermosetting polyurethane, wherein at least two components which cause a crosslinking or reaction are mixed with one another, comprising a processing unit containing a cylinder (2), in which a screw (3) is held such as to be able to rotate, wherein the cylinder (2) has at least one filling opening (4, 6) and one outlet opening (8), and comprising a mould (10) containing a cavity (9) for receiving and curing the mixed components, wherein the processing unit is designed as an injection moulding unit (1) having an injection nozzle (8), through which the plasticized injection moulding compound consisting of the first component (5) and the second component (7) is injected into the cavity (9) of the mould (10), wherein the cylinder (2) of the injection moulding unit (1) has at least one second filling opening (6) for supplying the second component (7), wherein the screw (3) of the cylinder (2) is connected to a metering unit (11, 36) via a mechanical coupling unit (24) in such a way that the quantity of the second component (7) introduced through the second filling opening (6) is metered as a function of an axial length of the screw (3), wherein the metering unit (11) has a double-acting metering cylinder (13) with a coupling rod on both sides on the one hand and a valve unit (15) on the other hand, via which the double-acting metering cylinder (13) is connected to a reservoir (12) of the second component (7) and to the second filling opening (6) of the injection moulding unit (1), **characterized in that** the metering unit (11, 36) has a piston rod (14) and a piston (29), wherein the piston rod (14) is rigidly and/or fixedly connected to the screw (3) of the injection moulding unit (1) via the mechanical coupling unit (24), **in that** the valve unit (15) comprises four directional control valves so that two connections (A, B) of the metering cylinder (13) which are assigned to the reservoir (12) and two connections (A', B') of the metering cylinder (13) which are assigned to the second filling opening (6) are respectively coupled to the reservoir (12) or to the second filling opening (6) via a directional control valve (16, 17, 18, 19), **in that** the connections (A, B; A', B') of the metering cylinder (11) which are assigned to the reservoir (12) and to the second filling opening (6) are each arranged at opposite ends of said metering cylinder, and **in that** the directional control valves (16, 17, 18, 19) of the metering unit (11) are actuated in such a way that, by virtue of the axial movement of the piston rod (14) towards a first end (20) of the metering cylinder (13) and towards a second end (21) of the metering cylinder (13), which is brought about by means of the mechanical coupling unit (24), the second component (7) located in a chamber (31) arranged in front of the piston (29) in the movement direction is pushed out to the second filling opening (6) and a portion of the second component (7) located in the reservoir (12) is sucked into the chamber (30) arranged behind the piston (29) in the movement direction.

2. The device according to claim 1, **characterized in that** the mechanical coupling unit (24) acts on the metering unit (11, 36) in such a way that a predefined percentage volume of the second component (7) relative to the first component (5) is supplied to the second filling opening (6) as a function of a forward travel and/or a backward travel of the screw (3).

3. The device according to claim 1 or 2, **characterized in that** the mechanical coupling unit (24) has a connecting linkage which at a first end is fixedly connected to the screw (3) and at a second end is fixedly connected to the piston rod (14) of the metering unit (11, 36).

4. The device according to any of claims 1 to 3, **characterized in that** the second filling opening (6) is arranged in a region between an intake zone (E) and a compression zone (K) of the injection moulding unit (1).

## Revendications

1. Dispositif destiné au traitement de matières plastiques, en particulier de polyuréthane duroplastique, sachant qu'au moins deux composants, qui provoquent une réticulation ou une réaction, sont mélangés ensemble, ledit dispositif étant doté d'une unité de traitement qui comprend un cylindre (2), dans lequel une vis hélicoïdale est logée à rotation, sachant que le cylindre (2) présente au moins une ouverture de remplissage (4, 6) et une ouverture d'évacuation (8), et d'un outil de formage (10), qui est doté d'une cavité (9) pour la réception et le durcissement des composants mélangés, sachant que l'unité de traitement est réalisée en tant qu'unité de moulage par injection (1) pourvue d'une buse d'injection (8) au moyen de laquelle la masse à mouler plastifiée, formée par le premier composant (5) et le deuxième composant (7), est injectée dans la cavité (9) de l'outil de formage (10) et que le cylindre (2) de l'unité de moulage par injection (1) présente au moins une deuxième ouverture de remplissage (6) pour l'introduction du deuxième composant (7), que la vis hélicoïdale (3) du cylindre (2) est reliée à une unité de dosage (11, 36) par l'intermédiaire d'une unité de couplage (24) mécanique de telle manière que la quantité de deuxième composant (7), introduite par la deuxième ouverture de remplissage (6), soit dosée en fonction de la position axiale de la vis hélicoïdale (3), que l'unité de dosage (11) est dotée, d'une part, d'un cylindre de dosage (13) à double action, avec une tige de couplage et, d'autre part, d'un groupe de le cylindre de dosage (13) à double action est relié à un réservoir (12) du deuxième composant (7) et à la deuxième ouverture de remplissage (6) de l'unité de moulage par injection (1), **caractérisé en ce que** l'unité de dosage (11, 36) dispose d'une tige de piston (14) et d'un piston (29), sachant que la tige de piston (14) est reliée rigidement et / ou fixement à la vis hélicoïdale (3) de l'unité de moulage par injection (1) par l'intermédiaire de l'unité de couplage mécanique (24), que le groupe de soupapes (15) comprend quatre distributeurs de sorte que deux raccords (A, B) du cylindre de dosage (13), associés au réservoir (12), et deux raccords (A', B') du cylindre de dosage (13), associés à la deuxième ouverture de remplissage (6), soient couplés chacun avec le réservoir (12), respectivement avec la deuxième ouverture de remplissage (6), que les raccords (A, B ; A', B') du cylindre de dosage (13) à double action, associés au réservoir (12) et à la deuxième ouverture de remplissage (6), sont respectivement disposés à des extrémités de celui-ci opposées l'une à l'autre, et que les distributeurs (16, 17, 18, 19) de l'unité de dosage (11, 36) sont commandés de telle manière que, par le déplacement axial de la tige de piston (14), provoqué par l'unité de couplage mécanique (24) en direction d'une première extrémité (20) du cylindre de dosage (13) et en direction d'une deuxième extrémité (21) du cylindre de dosage (13), le deuxième composant (7), contenu dans une chambre (31), disposée en amont du piston (29) dans la direction de déplacement, est presse hors de la deuxième ouverture de remplissage (6) et qu'une partie du deuxième composant (7), contenu dans le réservoir (12), est aspiré dans la chambre (30) disposée en aval du piston (29) dans la direction du déplacement.

2. Dispositif selon la revendication 1, **caractérisé en ce que** l'unité de couplage (24) agit sur l'unité de dosage (11, 36) de telle manière qu'un pourcent volumétrique de deuxième composant (7) par rapport au premier composant (5) soit conduit à la deuxième ouverture de remplissage (6) en fonction d'une course avant et / ou d'une course arrière.

3. Dispositif selon revendication 1 ou 2, **caractérisé en ce que** l'unité de couplage (24) présente une tringlerie de liaison qui est reliée fixement à la vis hélicoïdale (3), à une première extrémité, et à la tige de piston (14), à une deuxième extrémité.

4. Dispositif selon l'une des revendications 1 à 3 **caractérisé en ce que** la deuxième ouverture de remplissage (6) est disposée dans une région située entre une zone d'alimentation (E) et une zone de compression (K) de l'unité de moulage par injection (1).
